# EUROPEAN PATENT SPECIFICATION

(11) **EP 3 355 114 B1**
(45) Date of publication and mention of the grant of the patent: **04.03.2020**
(21) Application number: 18153086.6
(22) Date of filing: 23.01.2018
(51) Int. Cl.: G03B 17/56, A45C 11/38

(54) **IMPROVED CASING FOR VIDEO CAMERAS AND METHOD FOR MANUFACTURING SAID CASING**
VERBESSERTES GEHÄUSE FÜR VIDEOKAMERAS UND VERFAHREN ZUR HERSTELLUNG DIESES GEHÄUSES
BOÎTIER AMÉLIORÉ POUR DES CAMÉRAS VIDÉO ET PROCÉDÉ DE FABRICATION DE CE BOÎTIER

(30) Priority: 25.01.2017 IT 201700008025
(43) Date of publication of application: 01.08.2018
(73) Proprietor: Tecnovideo S.r.l., 36030 Villaverla (Vicenza) (IT)
(72) Inventor: FABRIS, Christian, 36030 VILLAVERLA (VI) (IT); CONTRO, Carlos Alberto, 36031 DUEVILLE (VI) (IT)
(74) Representative: Marchioro, Paolo

(56) References cited:
- EP-A2- 0 446 882
- EP-A2- 1 575 265
- JP-A- H04 301 975
- JP-A- S61 202 576
- JP-A- 2002 258 393
- US-A1- 2011 286 735

## Description

The present invention regards an improved casing for video cameras, as well as a method for manufacturing said casing.

Surveillance video cameras must often be installed outdoors or in "harsh" environments such as industrial rooms, workshops, chemical laboratories, oil drilling platforms, etc., requiring an appropriate protection against humidity, atmospheric agents, low or high temperatures, dust, corrosive substances, vibrations and acts of vandalism.

In order to overcome the aforementioned demanding environments, video cameras are inserted into special protection casings generally made of metal or plastic, obtained from the assembly of different components: a cylindrical or prismatic central body, within which there is a framework for the positioning and support of the video camera, a window made of transparent material, a "cap" or bottom and possibly devices for monitoring parameters such as temperature and humidity, such as fans, heaters, etc.

The operation of assembling such components generally consists of suitably blocking the transparent window closing the front end of the central body, subsequently positioning the video camera in the central body by means of the support framework, sealing the casing by positioning the aforementioned bottom to close the rear end of the central body and connecting the video camera to the power mains and computer network by means of special cables and electrical connectors.

An example of such casing to protect surveillance video camera from dust is the casing described in the Japanese document JP04301975.

In particular, this casing presents a frame supporting camera comprising an optical unit, a camera controller, a rectangular-cylindrical case loading frame and a transparent component attached at the opening of such casing.

In order to guarantee an appropriate sealing of the casing and thus the protection of the video camera against the entry of solid bodies and external fluid substances, it is known to provide the window of the casing resting on a metal flange welded externally or internally with respect to the central body, at the front closing position and, subsequently, locking it in such closing position by coupling the welded flange by means of a counter-flange arranged frontwards with respect to the window, according to known techniques. Subsequently, the bottom is arranged resting on a metal flange welded externally or internally with respect to the aforementioned central body, in a position to close the rear end, where it is locked in such position by means of screws or bolts.

However, such casings reveal various drawbacks.

A first drawback lies in the fact that the manufacturing and assembly of the various components of the casing by means of a flange system requires considerable amount of time for obtaining the casing itself. Furthermore, the assembly of such flanges by welding entails the need of having to carry out an operation for cleaning and/or polishing the welding thus increasing the manufacturing times as well as the casing production costs.

The presence of the aforementioned flanges for assembling the casings of the prior art disadvantageously determines the drawback of having to use a greater amount of material than the amount actually required to obtain the central body of the casings.

A further drawback lies in the fact that the manufacturing of metal flanges according to known techniques generates a surplus of metal material that cannot be utilised for subsequent machining operations and thus has to be discarded. The aforementioned waste of metal material entails an increase of cost for manufacturing the casing.

The aim of the present invention is to overcome all the aforementioned drawbacks.

In particular, a first object of the invention is to provide a casing for video cameras capable of guaranteeing high levels of protection against external agents in a manner such that it can also be used in the so-called "harsh" environments.

Another object of the invention is to provide a casing for video cameras requiring the least time possible for the manufacturing and the assembly thereof with respect to the casings of the prior art.

Still another object of the invention is to limit the amount of material required for manufacturing components to be assembled for defining the aforementioned casing.

Thus, another object of the invention is to reduce the production of waste material to obtain the aforementioned components.

Lastly, an object of the invention is to provide a method for manufacturing a casing for video cameras that is easy to obtain and that does not require long execution times.

The aforementioned objects are attained by a casing for video cameras according to independent claim 1.

The aforementioned objects are also attained by a method for manufacturing a casing for video cameras according to independent claim 11. Further detailed characteristics of the invention are outlined in the relative dependent claims.

The aforementioned objects, alongside the advantages described hereinafter, shall be outlined in the description of a preferred embodiment of the invention, provided solely by way of non-limiting example, with reference to the following attached drawings wherein:
- fig. 1 shows an axonometric view of the assembled casing of the invention;
- fig. 2 shows an exploded axonometric view of the casing of the invention;
- fig. 3 shows a cross-section of the assembled casing of the invention;
- figs. 4a, 4b and 4c show - in cross-sectional view - respectively the head element, the tubular body and the bottom element of the invention.

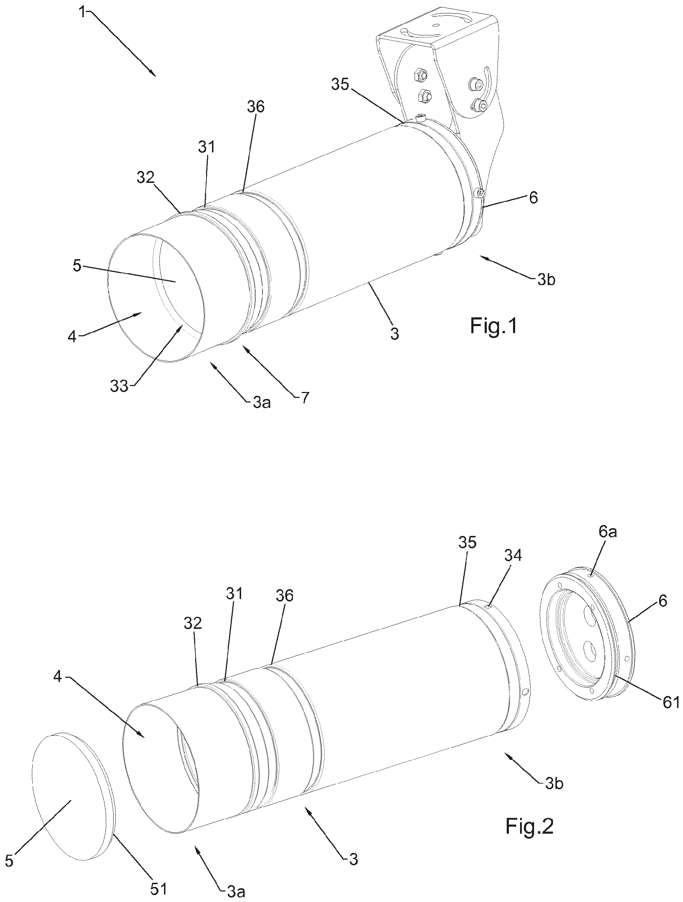

The casing for video cameras according to the preferred embodiment of the invention is represented in fig. 1, where it is indicated in its entirety with **1.**

For further clarity, it is hereby specified that the expression video camera is used to indicate any electronic device for acquiring sequential images and/or videos of the per se known type.

As observable in the aforementioned fig. 1, the casing **1** comprises a tubular body **3** with substantially longitudinal development having the first end **3a** and the second end **3b** open and within which there is defined a housing **4** configured to house a framework **2** for supporting a video camera **100.** Preferably but not necessarily, such tubular body **3** is substantially cylindrical-shaped.

However, in alternative embodiments of the invention it cannot be ruled out that such tubular body **3** be prismatic-shaped.

The tubular body **3** is preferably made of metal material, preferably selected from among aluminium, stainless steel or an alloy thereof. As a matter of fact, metal is the most appropriate material for use outdoors and in aggressive environments given its durability, the fact that it is extremely resistant against atmospheric agents and it does not alter its mechanical and aesthetic features over time. Furthermore, metal casings offer greater protection against tampering with respect to those made of plastic for example.

In particular, the use of stainless steel enables using the casing **1** in all environments rich in salt and/or corrosive chemical vapours such as chemical plants, railway and highway tunnels, sea oil drilling platforms, on board ships, etc.

However, according to different embodiments of the invention it cannot be ruled out that the tubular body **3** can be made of plastic material.

According to the aforementioned preferred embodiment of the invention, the casing **1** comprises a head element **5** made of transparent material and positioned to close the first end **3a** of the tubular body **3.**

Advantageously, the head element **5** is made of glass, preferably tempered glass, so as to enhance resistance against mechanical stresses and heat shocks.

However, it cannot be ruled out that the head element **5** be made of germanium or plastic. In particular, the presence of a head element **5** made of germanium enables the use of thermal video cameras for night vision and/or other optical equipment that requires extremely sensitive infrared detectors. As observable in fig. 2, according to the preferred embodiment of the invention, such head element **5** is substantially disc-shaped with smaller or equal diameter **d1** with respect to the internal diameter **d2** of the tubular body **3,** so as to be at least partly inserted into the latter to close the first end **3a.** However, according to different embodiments of the invention it cannot be ruled out that such head element **5** be shaped differently with respect to the disc-shape.

Preferably but not necessarily, the head element **5** comprises a first groove **51** defined along the lateral surface thereof, as shown in fig. 2, at which there is coupled a first sealing gasket **8.**

In particular, such first sealing gasket **8** has the outer diameter **d5** thereof larger or equal with respect to the inner diameter **d2** of the tubular body **3,** so as to define a static sealing coupling of the head element **5** with the tubular body **3** once the former is inserted into the tubular body **3** closing the first end **3a.**

Advantageously, such static sealing coupling guarantees an efficient sealing of the aforementioned first end **3a.**

Preferably, such first sealing gasket **8** is made of elastomeric material such as for example chloroprene, ethylene-propylene, nitrile, silicone, etc.

Even more preferably, such first sealing gasket **8** is a gasket of the O-ring type. However, in different embodiments of the invention it cannot be ruled out that such first sealing gasket **8** be not made of elastomeric material or be not present.

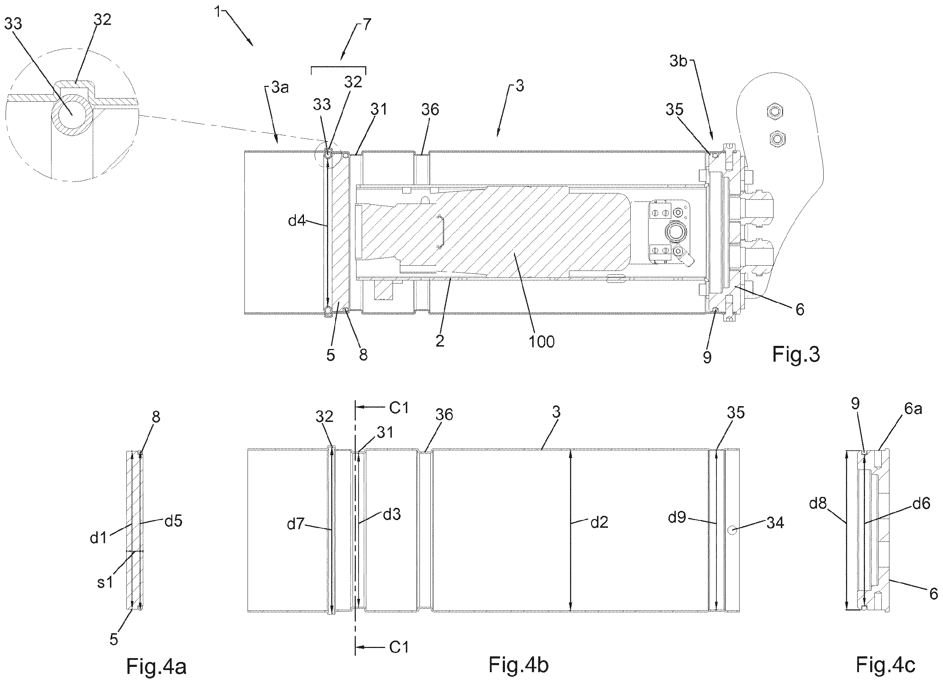

Advantageously, as shown in fig. 3, when the head element **5** is arranged to close the first end **3a,** the advancement thereof along the housing **4** of the tubular body **3** is stopped by the first stop means **31** projecting towards the inside of the aforementioned tubular body **3,** in particular they project towards the inside of the aforementioned housing **4,** and defined by deformation of the tubular body **3** in proximity of the aforementioned first end **3a.**

Preferably but not necessarily, such deformation is a circumferential deformation of the outer surface of the tubular body **3.**

The presence of such first stop means **31** enables to accurately define the position where the head element **5** must be arranged to close the first end **3a.** Further advantageously, such first stop means **31,** being defined by the deformation of the tubular body **3,** enable reducing both the amount of material required as well as the time required for manufacturing the casing of the invention with respect to the casings of the prior art given that there is not required the definition and installation of further external locking elements, flanges for example, on the tubular body **3,** thus attaining some of the main objects of the present invention.

Still advantageously, the presence of the first stop means **31** defined by deformation avoids the need for fixing by means of welding external components to the casing, flanges for example, with the ensuing saving of time and cost for manufacturing the casing **1** with respect to the prior art casings. Preferably but not necessarily, the aforementioned first stop means **31** radially project towards the inside of the tubular body **3** along a first circumference **c1** identified in proximity of the first end **3a** and represented in fig. 4b by the line of section C₁C₁.

According to the preferred embodiment of the invention, such first stop means **31** are fully defined along the first circumference **c1.** However, according to alternative embodiments of the invention, it cannot be ruled out that such first stop means **31** be limitedly defined at one or more sections of the aforementioned circumference **c1.**

It should be observed that such first stop means **31** projecting along at least one section of the circumference **c1,** preferably along the entire circumference **c1,** could alternatively be defined as first circumferential stop means **31.**

Still preferably, such first stop means **31** define a smaller inner diameter **d3** with respect to the diameter **d1** of the head element **5** so as to stop the advancement of the latter along the tubular body **3** when it is inserted into the housing **4** to be arranged to close the first end **3a.**

Preferably but not necessarily, such first circumference **c1** is defined at a distance from the opening of the end **3a** larger than the thickness **s1** of the head element **5** so that the latter is arranged entirely inside the tubular body **3** and thus protected against dusts, external bodies and fluid substances that would deteriorate the quality of the image that can be acquired by the video camera **100** through the head element **5.**

Advantageously, such protection against dusts etc. enables using the casing **1** in all particularly harsh environments where the head element **5** cannot be cleaned using the known techniques, such as the use of wipers.

According to the preferred embodiment of the invention, the casing **1** also comprises a stop unit **7** for locking the movement of the head element **5** at the position for closing the first end **3a** in the opposite direction with respect to the first stop means **31.**

As observable in fig. 3, in particular, such stop unit **7** is provided with an inner seat **32** obtained by deformation towards the outside of the tubular body **3.** Such inner seat **32** is arranged at a distance from the first stop means **31** substantially corresponding to the thickness **s1** of the head element **5,** and it defines a larger inner diameter **d7** with respect to the inner diameter **d2** of the tubular body **3.**

The stop unit **7** further comprises second stop means **33** configured to be at least partly received in the aforementioned inner seat **32.** Advantageously, the second stop means **33** are configured to have the inner diameter **d4** thereof smaller than the diameter **d1** of the head element **5** so as to block the movement of the latter in the opposite direction with respect to the first stop means **31** when it is in the position for closing the first end **3a.**

Preferably but not necessarily, such second stop means **33** comprise an elastic element configured to be inserted by deformation along the housing **4** of the tubular body **3** and be received in inoperative configuration in the aforementioned inner seat **32.** It should be observed that the term inoperative configuration is used to indicate the shape that such elastic element takes naturally when no external forces are applied thereon.

According to the preferred embodiment of the invention, such elastic element has a substantially longitudinal development, preferably in closed loop configuration, which defines an inner diameter **d4** smaller than the diameter **d1** of the head element **5** when it is arranged in the aforementioned inner seat **32.** Preferably but not necessarily, such elastic element is made of polymeric material, more preferably polyurethane.

Advantageously, the fact of locking the head element **5** by means of the aforementioned stop unit **7** enables obtaining a closure of the first end **3a** of the reversible type.

However, according to variant embodiments of the invention, it cannot be ruled out that such stop unit **7** be absent and the head element **5** be arranged on the first stop means **31** and be locked in the position for closing the first end **3a** using glue or known adhesive substances.

As observable in fig. 1, the casing **1** further comprises a bottom element 6 positioned to close the aforementioned second end **3b,** opposite to the first end **3a.**

Preferably but not necessarily, such bottom element **6** has a substantially disc-like shape in which there is identified at least one section with smaller diameter **d8** with respect to the inner diameter **d2** of the tubular body **3.**

However, according to different embodiments of the invention, it cannot be ruled out that such bottom element **6** be prismatic-shaped, as long as appropriate to close the aforementioned second end **3b** of the tubular body **3.** Advantageously, the bottom element **6** is made of metal material, preferably aluminium or stainless steel according to the utilisation needs of the casing **1,** as described previously.

However, according to different embodiments of the invention, it cannot be ruled out that such bottom element **6** be made of plastic material.

According to the preferred embodiment of the invention, the bottom element **6** comprises a second groove **61** defined along the lateral surface thereof. At such groove **61** there is arranged a second sealing gasket **9,** as shown in fig. 4c.

Preferably, such second sealing gasket **9** has an outer diameter **d6** larger or equal than the inner diameter **d2** of the tubular body **3** so as to be able to adapt to the aforementioned second groove **61** and enable the coupling for the static sealing of the bottom element **6** with the tubular body **3** when such two elements are coupled to close the second end **3b.**

Preferably but not necessarily, such second sealing gasket **9** is made of elastomeric material such as for example chloroprene, ethylene-propylene, nitrile, silicone, etc.

Even more preferably, such second sealing gasket **9** is a gasket of the O-ring type.

The preferred embodiment of the invention provides for that the tubular body **3** comprises a first abutment element **35** projecting towards the inside of the tubular body **3** in proximity of the second end **3b** so that said second sealing gasket **9** exerts the sealing thereof on the tubular body **3** at the first abutment element **35** when the bottom element **6** is arranged in a position to close the second end **3b,** as observable in fig. 3.

Advantageously, such first abutment element **35** is defined by deformation of the tubular body **3** and it has a smaller diameter **d9** with respect to the inner diameter **d2** of the tubular body **3,** thus guaranteeing a high sealing level and thus the protection against external agents, without requiring additional amount of material needed for providing additional components for closing the casing. However, according to alternative embodiments of the invention, it cannot be ruled out that such first abutment element **35** and/or such second sealing gasket **9** be absent.

Preferably, the bottom element **6** comprises at least one threaded hole **6a** which extends in the incident direction with respect to the lateral surface thereof and the tubular body **3** comprises at least one through hole **34** at the second end **3b,** as shown in fig. 2.

Advantageously, such threaded hole **6a** and such through hole **34** are configured so that when the bottom element **6** is arranged in a position to close the second end **3b,** they are aligned with respect to each other and can be coupled by means of suitable fastening means, preferably by means of a screw, so as to stably close the aforementioned second end **3b.**

However, according to alternative embodiments of the invention, it cannot be ruled out that such bottom element **6** and such tubular body **3** do not comprise holes and, thus, the closing of the second end **3b** by means of the bottom element **6** be obtained using glue or alternative fastening techniques known per se.

As observable in fig. 3, according to the preferred embodiment of the invention, the tubular body **3** comprises a second abutment element **36** projecting towards the inside and also defined by deformation of the tubular body **3.**

Advantageously, such second abutment element **36** is defined in a position identified between the first stop means **31** and the second end **3b,** so as to obtain a coupling by interference with the support framework **2** of the video camera **100** when it is inserted into the housing **4** of the tubular body **3.**

The presence of such second abutment element **36** and the aforementioned coupling by interference advantageously contribute to holding the entire structure of the casing **1** stable when it is assembled in the use configuration thereof.

However, according to alternative variant embodiments of the invention, it cannot be ruled out that such second abutment element **36** be absent.

According to the preferred embodiment of the invention, the support framework **2** is reversibly or irreversibly coupled to the bottom element **6** by means of suitable fixing means so that, when the aforementioned bottom element **6** is arranged in the position for closing the second end **3b,** such support framework **2** and the video camera **100** coupled thereto are arranged in the housing **4** in the use configuration of the casing **1.**

However, according to different embodiments of the invention, it cannot be ruled out that such support framework **2** be independent from the bottom element **6** and thus the insertion of the former and the arrangement of the latter in the closing position occurs at different times.

As previously mentioned, a method for obtaining a casing **1** for video cameras according to the preferred embodiment or according to the previously described alternative embodiments is part of the invention too.

Such method provides for performing a step for preparing and machining the components of the casing **1** and a step for assembling the components required for obtaining the casing **1.**

In particular, the aforementioned preparation and machining step comprises at least one first operation for roll-forming the tubular body **3** to obtain first stop means **31** projecting towards the inside of the housing **4** in proximity of the first end **3a.**

As previously mentioned, such first stop means **31** are suitable to stop the advancement of the head element **5** in a position for closing the first end **3a.** Advantageously, roll-forming is a quick and extremely precise mechanical machining which enables defining - directly on the surfaces of the tubular body **3** - the elements, including the aforementioned first stop means **31,** required for assembling the casing **1,** as better described hereinafter.

In particular, the roll-forming operation consists in using suitably ground metal rollers which exert - on the inner or outer surfaces of the tubular body **3** - a pressure greater than the yield stress of the material that the tubular body **3** is made of, causing a specific plastic deformation at the sections where the aforementioned elements are designated to be defined.

According to the preferred embodiment of the method of the invention, during the preparation and machining step, on the tubular body **3** there is also provided an inner seat **32** by means of deformation towards the outside of the tubular body **3** by means of a second roll-forming operation. Such inner seat **32** is defined at a distance from the first stop means **31** substantially corresponding to the thickness **s1** of the head element **5.**

Preferably but not necessarily, such second roll-forming operation is carried out simultaneously with the aforementioned first roll-forming operation. However, in variant embodiments of the invention, it cannot be ruled out that such second roll-forming operation be not carried out or be carried out at a different time with respect to the aforementioned first roll-forming operation. Back to the preferred embodiment of the method of the invention, the preparation and machining step provides for obtaining a first groove **51** at the lateral surface of the head element **5** and a second groove **61** at the lateral surface of the bottom element **6.**

Furthermore, during the aforementioned preparation and machining step there is provided for an operation for drilling the lateral surface of the bottom element **6** so as to define a threaded hole **6a** with development in the incident direction with respect to the lateral surface of the bottom element **6** and an operation for drilling the tubular body **3** at the second end **3b** so as to obtain at least one through hole **34.** However, in different embodiments of the invention, it cannot be ruled out that the operations of obtaining the first and the second groove **51, 61** and/or the drilling operations be not carried out.

Going back to the preferred embodiment of the method of the invention, the preparation and machining step also provides for a third operation for roll-forming the tubular body **3** in proximity of the second end **3b** so as to define the first abutment element **35** projecting towards the inside of the tubular body **3.**

However, according to an alternative embodiment of the invention, it cannot be ruled out that such first abutment element **35** be not obtained by means of roll-forming or be absent.

Preferably but not necessarily, such preparation and machining step further comprises a fourth operation for roll-forming the tubular body **3** in a position identified between the first stop means **31** and the second end **3b** so as to obtain the second abutment element **36** projecting radially towards the inside. Advantageously, such second abutment element **36** enables coupling - by interference - the tubular body **3** with the support framework **2** of the video camera **100** when the latter are inserted into the housing **4** of the tubular body **3,** as described hereinafter.

However, also in this case, according to an alternative embodiment of the invention, it cannot be ruled out that such second abutment element **36** be not obtained by means of a roll-forming operation or be absent.

Preferably, the preferred embodiment of the method of the invention provides for that also the second, third and fourth roll-forming operations be carried out simultaneously with the first roll-forming operation.

However, it cannot be ruled out that such operations be carried out at different times.

Subsequently to the preparation and machining step, the method of the invention provides for the aforementioned step for assembling the components obtained therein so as to form the casing **1** in the use configuration thereof.

In particular, during the aforementioned assembling step, the first sealing gasket **8** is positioned at the first groove **51** of the head element **5** and, thus coupled, the head element **5** and the first sealing gasket **8** are inserted into the tubular body **3** preferably through the first end **3a** and rested against the first stop means **31** at the aforementioned position for closing the first end **3a.** Advantageously, when the head element **5** is arranged resting against the first stop means **31,** the first sealing gasket **8** exerts pressure on the inner surface of the tubular body **3,** thus enabling the static sealing coupling of the head element **5** with the tubular body **3** and thus guaranteeing an efficient sealing of the aforementioned first end **3a.**

The head element **5** is subsequently locked on the opposite side of the first stop means **31** by arranging second stop means **33** at least partly in the inner seat **32.** Such second stop means **33** preferably comprise an elastic element arranged in inoperative configuration in the inner seat **32,** defining a smaller inner diameter **d4** with respect to the diameter **d1** of the head element **5** so as to prevent the displacement of the head element **5** in the opposite direction with respect to the first stop means **31.**

The video camera **100** is subsequently fixed to the support framework **2,** which is in turn positioned in the housing **4** so as to enable a coupling - by interference - between the framework and the second abutment element **36** with the aim of thus arranging the video camera **100** in its optimal use position. According to the preferred embodiment of the invention, the support framework **2** is coupled to the bottom element **6,** as described previously. Thus, advantageously, when the support framework **2** with the video camera **100** is positioned in the housing **4** also the bottom element **6** is simultaneously arranged in the position for closing the second end **3b** thus quickening the step of assembling the casing **1.**

However, according to different embodiments of the invention, it cannot be ruled out that such support framework **2** be independent from the bottom element **6** and the operations of arranging these components in the casing **1** occur at different times.

Going back to the preferred embodiment of the method of the invention, in order to enable an appropriate sealing of the second end **3b,** the second sealing gasket **9** is positioned at the second groove **61** of the bottom element **6** and the pair thus formed is inserted into the tubular body **3** so as to align the threaded hole **6a** present on the lateral surface of the bottom element **6** and the through hole **34** of the tubular body **3.** Lastly, such holes are coupled by means of fastening means, preferably by means of a screw.

Advantageously, according to the preferred embodiment of the method of the invention, when the bottom element **6** is in the position for closing the second end **3b,** the second sealing gasket **9** exerts the sealing thereof on the first abutment element **35** defined on the inner surface of the tubular body **3** in proximity of the second end **3b** guaranteeing an appropriate sealing of the casing **1** with respect to the external environment.

Thus, in light of the above, the casing for video cameras of the invention attains all the pre-set objects.

In particular, the combination of sealing gaskets and stop means for positioning the head element and the bottom element to respectively close the first and the second end of the tubular body guarantees a high sealing level of the casing with the ensuing protection of the video camera against "harsh" external agents.

Furthermore, the presence of stop means and abutment means on the surfaces of the tubular body eliminates the need for providing additional external components for sealing the casing with an ensuing reduction of the time and costs required for the operation of providing and assembling the casing of the invention with respect to the casings of the prior art. Furthermore, providing such stop means and abutment means directly on the surface of the tubular body enables limiting the amount of material used for manufacturing the components to be assembled to define the aforementioned casing and thus also reduce the production of waste material to obtain the aforementioned components.

Furthermore, providing the casing of the invention by means of roll-forming operations enables manufacturing a casing for video cameras easily, precisely and quickly.

## Claims

1. Casing (1) for video cameras (100) comprising:
- a tubular body (3) with substantially longitudinal development having the first end (3a) and the second end (3b) open and within which there is defined a housing (4) configured to house a support framework (2) for supporting one of said video cameras (100);
- a head element (5) made of transparent material, configured to be at least partly inserted into said tubular body (3) and positioned in a closing position to close said first end (3a);
- a bottom element (6) positioned to close said second end (3b); **characterised in that** said tubular body (3) comprises first stop means (31) projecting towards the inside of said tubular body (3) so as to stop the advancement of said head element (5) in said closing position of said first end (3a), said first stop means (31) being defined by deformation of the outer surface of said tubular body (3) in proximity of said first end (3a), **obtained by roll-forming said tubular body (3).**

2. Casing (1) for video cameras (100) according to claim 1,
**characterised in that:**
- said tubular body (3) is substantially cylindrical-shaped;
- said first stop means (31) are radially projecting towards the inside of said tubular body (3) along a first circumference (c1) identified in proximity of said first end (3a);
- said head element (5) is substantially disc-shaped with diameter (d1) smaller or equal with respect to the inner diameter (d2) of said tubular body (3) and larger than the diameter (d3) defined by said first stop means (31).

3. Casing (1) for video cameras (100) according to any one of the preceding claims, **characterised in that** it comprises a stop unit (7) provided with:
- an inner seat (32) obtained by deformation towards the outside of said tubular body (3) at a distance from said first stop means (31) substantially corresponding to the thickness (s1) of said head element (5);
- second stop means (33) configured to be received at least partly in said inner seat (32) so as to block the movement of said head element (5) in the opposite direction with respect to said first stop means (31).

4. Casing (1) for video cameras (100) according to claim 3, **characterised in that** said second stop means (33) comprise an elastic element suitable to be inserted by deformation along said housing (4) of said tubular body (3) and received in inoperative configuration in said inner seat (32).

5. Casing (1) for video cameras (100) according to claim 4, **characterised in that** said elastic element has a substantially longitudinal development, preferably configured to form a closed loop, said elastic element - when received in said inner seat (32) - defining an inner diameter (d4) smaller than said diameter (d1) of said head element (5).

6. Casing (1) for video cameras (100) according to any one of the preceding claims, **characterised in that** said head element (5) comprises a first sealing gasket (8) arranged at a first groove (51) defined along the lateral surface of said head element (5), said first sealing gasket (8) preferably being an O-ring gasket with outer diameter (d5) larger or equal to said inner diameter (d2) of said tubular body (3).

7. Casing (1) for video cameras (100) according to any one of the preceding claims, **characterised in that** said bottom element (6) comprises a second sealing gasket (9) arranged at a second groove (61) defined along the lateral surface of said bottom element (6), said second sealing gasket (9) preferably being an O-ring gasket with outer diameter (d6) larger or equal to said inner diameter (d2) of said tubular body (3).

8. Casing (1) for video cameras (100) according to claim 7, **characterised in that** said tubular body (3) comprises a first abutment element (35) projecting towards the inside and defined by deformation of said tubular body (3) in proximity of said second end (3b) so that said second sealing gasket (9) exerts the sealing thereof on said tubular body (3) at said first abutment element (35) when said bottom element (6) is arranged in said closing position.

9. Casing (1) for video cameras (100) according to any one of the preceding claims, **characterised in that:**
- said bottom element (6) comprises at least one threaded hole (6a) which extends in the incident direction with respect to the lateral surface of said bottom element (6);
- said tubular body (3) comprises at least one through hole (34) at said second end (3b);
said threaded hole (6a) and said through hole (34) being configured to be aligned in said position to close said second end (3b) so as to stably couple said bottom element (6) with said tubular body (3) by means of fastening means, preferably a screw.

10. Casing (1) for video cameras (100) according to any one of the preceding claims, **characterised in that** said tubular body (3) comprises a second abutment element (36) projecting inwards defined by deformation of said tubular body (3) in a position identified between said first stop means (31) and said second end (3b), so as to obtain a coupling by interference with said support framework (2) when said support framework (2) is inserted into said housing (4) of said tubular body (3).

11. Method for obtaining a casing (1) for video cameras (100) according to any one of the preceding claims, said method providing for:
- a step for preparing and machining a tubular body (3) with substantially longitudinal development, a head element (5) and bottom element (6); and
- an assembly step;
**characterised in that** said preparing and machining step comprises at least one first step for roll-forming said tubular body (3) so as to obtain first stop means (31) projecting towards the inside of said tubular body (3) in proximity of said first end (3a) suitable to stop the advancement of said head element (5) along said tubular body (3).

12. Method for obtaining a casing (1) for video cameras (100) according to claim 11, **characterised in that** said preparing and machining step comprises a second operation for roll-forming said tubular body (3) for obtaining said inner seat (32) towards the outside of said tubular body (3) at a distance from said first stop means (31) substantially corresponding to the thickness (s1) of said head element (5).

13. Method for obtaining a casing (1) for video cameras (100) according to claim 12, **characterised in that** said assembly step comprises the following steps:
- inserting said head element (5) resting against said first stop means (31) into said tubular body (3) at said position for closing said first end (3a);
- arranging said second stop means (33) at least partly in said inner seat (32) so as to block the movement of said head element (5) in the opposite direction with respect to said first stop means (31), said second stop means preferably comprising an elastic element suitable to be inserted by deformation along said housing (4) of said tubular body (3) and received in said inner seat (32) in inoperative configuration;
- arranging one of said video cameras (100) in said support framework (2) and positioning said support framework (2) in said housing (4);
- fixedly arranging said bottom element (6) at said position for closing said second end (3b).

## Patentansprüche

1. Gehäuse (1) für Videokameras (100), Folgendes umfassend:
- einen röhrenförmigen Körper (3) mit im Wesentlichen länglicher Entwicklung, dessen erstes Ende (3a) und zweites Ende (3b) offen sind und in dem eine Aufnahme (4) definiert ist, die dazu konfiguriert ist, einen Tragrahmen (2) zur Halterung einer der besagten Videokameras (100) aufzunehmen;
- ein Kopfelement (5) aus transparentem Material, dazu konfiguriert, wenigstens teilweise in den besagten röhrenförmigen Körper (3) eingesetzt und in einer Schließposition zur Schließung des besagten ersten Endes (3a) positioniert zu werden;
- ein Bodenelement (6), so positioniert, dass es das besagte zweite Ende (3b) schließt;
**dadurch gekennzeichnet, dass** der besagte röhrenförmige Körper (3) erste Anschlagmittel (31) umfasst, die zum Inneren des besagten röhrenförmigen Körpers (3) ragen, um den Vorschub des besagten Kopfelements (5) in die besagte Schließposition des besagten ersten Endes (3a) anzuhalten, wobei die besagten ersten Anschlagmittel (31) durch Verformung der Außenfläche des besagten röhrenförmigen Körpers (3) in der Nähe des besagten ersten Endes (3a) definiert sind, wobei die Verformung durch Rollformen des besagten röhrenförmigen Körpers (3) erzielt wird.

2. Gehäuse (1) für Videokameras (100) nach Patentanspruch 1, **dadurch gekennzeichnet, dass**:
- der besagte röhrenförmige Körper (3) im Wesentlichen zylinderförmig ist;
- die besagten ersten Anschlagmittel (31) radial zum Inneren des besagten röhrenförmigen Körpers (3) ragen, entlang eines ersten Umfangs (c1), der in der Nähe des besagten ersten Endes (3a) identifiziert ist;
- das besagte Kopfelement (5) im Wesentlichen scheibenförmig ist mit einem Durchmesser (d1), der kleiner oder gleich dem Innendurchmesser (d2) des besagten röhrenförmigen Körpers (3) und breiter als der durch die besagten ersten Anschlagmittel (31) definierte Durchmesser (d3) ist.

3. Gehäuse (1) für Videokameras (100) nach einem jeden der vorstehenden Patentansprüche, **dadurch gekennzeichnet, dass** es eine Anschlageinheit (7) umfasst, die Folgendes aufweist:
- eine innere Aufnahme (32), gewonnen durch Verformung des besagten röhrenförmigen Körpers (3) nach außen in einem Abstand zu den besagten ersten Anschlagmitteln (31), der im Wesentlichen der Stärke (s1) des besagten Kopfelements (5) entspricht;
- zweite Anschlagmittel (33), die dazu konfiguriert sind, wenigstens teilweise in der besagten inneren Aufnahme (32) aufgenommen zu werden, so dass sie die Bewegung des besagten Kopfelements (5) in die den besagten ersten Anschlagmitteln (31) entgegengesetzte Richtung blockieren.

4. Gehäuse (1) für Videokameras (100) nach Patentanspruch 3, **dadurch gekennzeichnet, dass** die besagten zweiten Anschlagmittel (33) ein elastisches Element umfassen, das geeignet ist, durch Verformung entlang der besagten Aufnahme (4) des besagten röhrenförmigen Körpers (3) eingesetzt und in einer ruhenden Konfiguration in der besagten inneren Aufnahme (32) aufgenommen zu werden.

5. Gehäuse (1) für Videokameras (100) nach Patentanspruch 4, **dadurch gekennzeichnet, dass** das besagte elastische Element eine im Wesentlichen längliche Entwicklung aufweist, vorzugsweise so konfiguriert, dass es eine geschlossene Schleife bildet, wobei das besagte elastische Element - wenn es in der besagten inneren Aufnahme (32) aufgenommen ist - einen Innendurchmesser (d4) definiert, der kleiner ist als der besagte Durchmesser (d1) des besagten Kopfelements (5).

6. Gehäuse (1) für Videokameras (100) nach einem jeden der vorstehenden Patentansprüche, **dadurch gekennzeichnet, dass** das besagte Kopfelement (5) eine erste Dichtung (8) umfasst, die in einer ersten Rille (51) angeordnet ist, welche entlang der seitlichen Oberfläche des besagten Kopfelements (5) definiert ist, wobei die besagte erste Dichtung (8) vorzugsweise ein O-Ring ist mit einem Außendurchmesser (d5), der breiter oder gleich dem besagten Innendurchmesser (d2) des besagten röhrenförmigen Körpers (3) ist.

7. Gehäuse (1) für Videokameras (100) nach einem jeden der vorstehenden Patentansprüche, **dadurch gekennzeichnet, dass** das besagte Bodenelement (6) eine zweite Dichtung (9) umfasst, die in einer zweiten Rille (61) angeordnet ist, welche entlang der seitlichen Oberfläche des besagten Bodenelements (6) definiert ist, wobei die besagte zweite Dichtung (9) vorzugsweise ein O-Ring ist mit einem Außendurchmesser (d6), der breiter oder gleich dem besagten Innendurchmesser (d2) des besagten röhrenförmigen Körpers (3) ist.

8. Gehäuse (1) für Videokameras (100) nach Patentanspruch 7, **dadurch gekennzeichnet, dass** der besagte röhrenförmige Körper (3) ein erstes Anschlagelement (35) umfasst, das nach innen ragt und durch Verformung des besagten röhrenförmigen Körpers (3) in der Nähe des besagten zweiten Endes (3b) definiert ist, so dass die besagte zweite Dichtung (9) dessen Abdichtung auf dem besagten röhrenförmigen Körper (3) an dem besagten ersten Anschlagelement (35) bewirkt, wenn das besagte Bodenelement (6) in der besagten Schließposition angeordnet ist.

9. Gehäuse (1) für Videokameras (100) nach einem jeden der vorstehenden Patentansprüche, **dadurch gekennzeichnet, dass**:
- das besagte Bodenelement (6) wenigstens eine Gewindebohrung (6a) umfasst, die sich in der bezüglich der seitlichen Oberfläche des besagten Bodenelements (6) einfallenden Richtung erstreckt;
- der besagte röhrenförmige Körper (3) wenigstens eine Durchgangsbohrung (34) an dem besagten zweiten Ende (3b) umfasst;
wobei die besagte Gewindebohrung (6a) und die besagte Durchgangsbohrung (34) dazu konfiguriert sind, in der besagten Position zur Schließung des besagten zweiten Ende (3b) aufeinander ausgerichtet zu sein, um das besagte Bodenelement (6) durch Befestigungsmittel, vorzugsweise einer Schraube, stabil mit dem besagten röhrenförmigen Körper (3) zu kuppeln.

10. Gehäuse (1) für Videokameras (100) nach einem jeden der vorstehenden Patentansprüche, **dadurch gekennzeichnet, dass** der besagte röhrenförmige Körper (3) ein zweites Anschlagelement (36) umfasst, das nach innen ragt und durch Verformung des besagten röhrenförmigen Körpers (3) in einer Position, die zwischen den besagten ersten Anschlagmitteln (31) und dem besagten zweiten Ende (3b) identifiziert ist, um eine Kupplung durch Interferenz mit dem besagten Tragrahmen (2) zu erreichen, wenn der besagte Tragrahmen (2) in die besagte Aufnahme (4) des besagten röhrenförmigen Körpers (3) eingesetzt ist.

11. Verfahren zum Erhalt eines Gehäuses (1) für Videokameras (100) nach einem jeden der vorstehenden Patentansprüche, wobei das besagte Verfahren Folgendes umfasst:
- einen Schritt zur Vorbereitung und Bearbeitung eines röhrenförmigen Körpers (3) mit im Wesentlichen länglicher Entwicklung, eines Kopfelements (5) und eines Bodenelements (6); und
- einen Schritt des Zusammenbaus;
**dadurch gekennzeichnet, dass** der besagte Schritt der Vorbereitung und Bearbeitung wenigstens einen ersten Schritt des Rollformens des besagten röhrenförmigen Körpers (3) umfasst, um erste Anschlagmittel (31) zu erhalten, die zum Inneren des besagten röhrenförmigen Körpers (3) ragen, in der Nähe des besagten ersten Endes (3a), dazu geeignet, den Vorschub des besagten Kopfelements (5) entlang des besagten röhrenförmigen Körpers (3) anzuhalten.

12. Verfahren zum Erhalt eines Gehäuses (1) für Videokameras (100) nach Patentanspruch 11, **dadurch gekennzeichnet, dass** der besagte Vorbereitungs- und Bearbeitungsschritt einen zweiten Vorgang des Rollformens des besagten röhrenförmigen Körpers (3) umfasst, um die besagte innere Aufnahme (32) zum Äußeren des besagten röhrenförmigen Körpers (3) hin zu erhalten, in einem Abstand zu den besagten ersten Anschlagmitteln (31), der im Wesentlichen der Stärke (s1) des besagten Kopfelements (5) entspricht.

13. Verfahren zum Erhalt eines Gehäuses (1) für Videokameras (100) nach Patentanspruch 12, **dadurch gekennzeichnet, dass** der besagte Schritt des Zusammenbaus folgende Schritte umfasst:
- Einsetzen des besagten Kopfelements (5) an den besagten ersten Anschlagmitteln (31) anliegend in den besagten röhrenförmigen Körper (3), in der besagten Position zur Schließung des besagten ersten Endes (3a);
- wenigstens teilweise Anordnung der besagten zweiten Anschlagmittel (33) in der besagten inneren Aufnahme (32), um die Bewegung des besagten Kopfelements (5) in die den besagten ersten Anschlagmitteln (31) entgegengesetzte Richtung zu blockieren, wobei die besagten zweiten Anschlagmittel vorzugsweise ein elastisches Element umfassen, das geeignet ist, durch Verformung entlang der besagten Aufnahme (4) des besagten röhrenförmigen Körpers (3) eingesetzt und in einer ruhenden Konfiguration in der besagten inneren Aufnahme (32) aufgenommen zu werden;
- Anordnung einer der besagten Videokameras (100) in dem besagten Tragrahmen (2) und Positionierung des besagten Tragrahmens (2) in der besagten Aufnahme (4);
- feststehende Anordnung des besagten Bodenelements (6) in der besagten Position zur Schließung des besagten zweiten Endes (3b).

## Revendications

1. Boîtier (1) pour caméras vidéo (100) comprenant:
- un corps tubulaire (3) avec développement essentiellement longitudinal ayant la première extrémité (3a) et la deuxième extrémité (3b) ouvertes et à l'intérieur desquelles est défini un logement (4) configuré pour loger un cadre de soutien (2) pour supporter une desdites caméras vidéo (100);
- un élément de tête (5) réalisé en un matériel transparent, configuré pour être inséré au moins partiellement dans ledit corps tubulaire (3) et disposé dans une position de fermeture pour fermer ladite première extrémité (3a);
- un élément inférieur (6) positionné de manière à fermer ladite deuxième extrémité (3b);
**caractérisé en ce que** ledit corps tubulaire (3) comprend de premiers moyens d'arrêt (31) saillant vers l'intérieur dudit corps tubulaire (3) de manière à arrêter l'avancement dudit élément de tête (5) dans ladite position de fermeture de ladite première extrémité (3a), lesdits premiers moyens d'arrêt (31) étant définis par déformation de la surface extérieure dudit corps tubulaire (3) à proximité de ladite première extrémité (3a), obtenue par le roulage dudit corps tubulaire (3).

2. Boîtier (1) pour caméras vidéo (100) selon la revendication 1, **caractérisé en ce que:**
- ledit corps tubulaire (3) présente une forme essentiellement cylindrique;
- lesdits premiers moyens d'arrêt (31) sont radialement saillant vers l'intérieur dudit corps tubulaire (3) le long d'une première circonférence (c1) identifiée à proximité de ladite première extrémité (3a);
- ledit élément de tête (5) présente une forme essentiellement de disque avec un diamètre (d1) inférieur ou égal par rapport au diamètre intérieur (d2) dudit corps tubulaire (3) et supérieur par rapport au diamètre (d3) défini par lesdits premiers moyens d'arrêt (31).

3. Boîtier (1) pour caméras vidéo (100) selon l'une quelconque des revendications précédentes, **caractérisé en ce qu'**il comprend un groupe d'arrêt (7) pourvu de:
- un siège intérieur (32) réalisé par déformation vers l'extérieur dudit corps tubulaire (3) à une distance desdits premiers moyens d'arrêt (31) essentiellement correspondant à l'épaisseur (s1) dudit élément de tête (5);
- des deuxièmes moyens d'arrêt (33) configurés pour être accueillis au moins partiellement dans ledit siège intérieur (32) de manière à bloquer le mouvement dudit élément de tête (5) dans la direction opposée par rapport auxdits premiers moyens d'arrêt (31).

4. Boîtier (1) pour caméras vidéo (100) selon la revendication 3, **caractérisé en ce que** lesdits deuxièmes moyens d'arrêt (33) comprennent un élément élastique apte à être inséré par déformation le long dudit logement (4) dudit corps tubulaire (3) et accueilli dans une configuration de repos dans ledit siège intérieur (32).

5. Boîtier (1) pour caméras vidéo (100) selon la revendication 4, **caractérisé en ce que** ledit élément élastique présente un développement essentiellement longitudinal, préférablement configuré pour former une boucle fermée, ledit élément élastique - quand il est accueilli dans ledit siège intérieur (32) - définissant un diamètre intérieur (d4) qui est inférieur audit diamètre (d1) dudit élément de tête (5).

6. Boîtier (1) pour caméras vidéo (100) selon l'une quelconque des revendications précédentes, **caractérisé en ce que** ledit élément de tête (5) comprend un premier joint d'étanchéité (8) disposé à hauteur d'une première rainure (51) définie le long de la surface latérale dudit élément de tête (5), ledit premier joint d'étanchéité (8) étant préférablement un joint torique ayant un diamètre extérieur (d5) plus grand ou égal audit diamètre intérieur (d2) dudit corps tubulaire (3).

7. Boîtier (1) pour caméras vidéo (100) selon l'une quelconque des revendications précédentes, **caractérisé en ce que** ledit élément inférieur (6) comprend un deuxième joint d'étanchéité (9) disposé à hauteur d'une deuxième rainure (61) définie le long de la surface latérale dudit élément inférieur (6), ledit deuxième joint d'étanchéité (9) étant préférablement un joint torique ayant un diamètre extérieur (d6) plus grand ou égal audit diamètre intérieur (d2) dudit corps tubulaire (3).

8. Boîtier (1) pour caméras vidéo (100) selon la revendication 7, **caractérisé en ce que** ledit corps tubulaire (3) comprend un premier élément de butée (35) saillant vers l'intérieur et défini par déformation dudit corps tubulaire (3) à proximité de ladite deuxième extrémité (3b) de manière à ce que ledit deuxième joint d'étanchéité (9) exerce son étanchéité sur ledit corps tubulaire (3) à hauteur dudit premier élément de butée (35) quand ledit élément inférieur (6) est disposé dans ladite position de fermeture.

9. Boîtier (1) pour caméras vidéo (100) selon l'une quelconque des revendications précédentes, **caractérisé en ce que:**
- ledit élément inférieur (6) comprend au moins un trou fileté (6a) qui s'étend dans la direction incidente par rapport à la surface latérale dudit élément inférieur (6);
- ledit corps tubulaire (3) comprend au moins un trou passant (34) à hauteur de ladite deuxième extrémité (3b);
ledit trou fileté (6a) et ledit trou passant (34) étant configurés pour être alignés dans ladite position pour fermer ladite deuxième extrémité (3b) de manière à accoupler stablement ledit élément inférieur (6) avec ledit corps tubulaire (3) grâce à des moyens de fixation, préférablement une vis.

10. Boîtier (1) pour caméras vidéo (100) selon l'une quelconque des revendications précédentes, **caractérisé en ce que** ledit corps tubulaire (3) comprend un deuxième élément de butée (36) saillant vers l'intérieur défini par déformation dudit corps tubulaire (3) dans une position identifiée entre lesdits premiers moyens d'arrêt (31) et ladite deuxième extrémité (3b), de manière à réaliser un accouplement par interférence avec ledit cadre de soutien (2) quand ledit cadre de soutien (2) est inséré dans ledit logement (4) dudit corps tubulaire (3).

11. Méthode pour la réalisation d'un boîtier (1) pour caméras vidéo (100) selon l'une quelconque des revendications précédentes, ladite méthode prévoyant:
- une phase de préparation et usinage d'un corps tubulaire (3) à développement essentiellement longitudinal, d'un élément de tête (5) et d'un élément inférieur (6); et
- une phase d'assemblage;
**caractérisé en ce que** ladite phase de préparation et usinage comprend au moins une première opération de roulage dudit corps tubulaire (3) de manière à réaliser lesdits premiers moyens d'arrêt (31) saillant vers l'intérieur dudit corps tubulaire (3) à proximité de ladite première extrémité (3a) aptes à arrêter l'avancement dudit élément de tête (5) le long dudit corps tubulaire (3).

12. Méthode pour la réalisation d'un boîtier (1) pour caméras vidéo (100) selon la revendication 11, **caractérisé en ce que** ladite phase de préparation et usinage comprend une deuxième opération de roulage dudit corps tubulaire (3) pour réaliser ledit siège intérieur (32) vers l'extérieur dudit corps tubulaire (3) à une distance desdits premiers moyens d'arrêt (31) correspondant essentiellement à l'épaisseur (s1) dudit élément de tête (5).

13. Méthode pour la réalisation d'un boîtier (1) pour caméras vidéo (100) selon la revendication 12, **caractérisé en ce que** ladite phase d'assemblage comprend les opérations suivantes:
- introduction dudit élément de tête (5) reposant contre lesdits premiers moyens d'arrêt (31) dans ledit corps tubulaire (3) à hauteur de ladite position de fermeture de ladite première extrémité (3a);
- disposition desdits deuxièmes moyens d'arrêt (33) au moins partiellement dans ledit siège intérieur (32) de manière à bloquer le mouvement dudit élément de tête (5) dans la direction opposée par rapport auxdits premiers moyens d'arrêt (31), lesdits deuxièmes moyens d'arrêt comprenant préférablement un élément élastique apte à être inséré par déformation le long dudit logement (4) dudit corps tubulaire (3) et accueilli en configuration de repos dans ledit siège intérieur (32);
- disposition d'une desdites caméras vidéo (100) dans ledit cadre de soutien (2) et positionnement dudit cadre de soutien (2) dans ledit logement (4);
- disposition fixe dudit élément inférieur (6) à hauteur de ladite position de fermeture de ladite deuxième extrémité (3b).
